Europäisches Patentamt

European Patent Office

Office européen des brevets

(11) Veröffentlichungsnummer: **0 437 842 A1**

# (12) EUROPÄISCHE PATENTANMELDUNG

(21) Anmeldenummer: 90125634.7

(22) Anmeldetag: 28.12.90

(51) Int. Cl.⁵: **C25B 11/03**, C25B 9/00, H01M 4/86

(30) Priorität: 10.01.90 DE 4000505

(43) Veröffentlichungstag der Anmeldung:
24.07.91 Patentblatt 91/30

(84) Benannte Vertragsstaaten:
BE CH DE FR GB IT LI NL

(71) Anmelder: HOECHST AKTIENGESELLSCHAFT
Postfach 80 03 20
W-6230 Frankfurt am Main 80(DE)

(72) Erfinder: Vom Bauer, Hans (verstorben)

(DE)
Erfinder: Dapperheld, Steffen, Dr.
Im Birkenfeld 28
W-6238 Hofheim am Taunus(DE)
Erfinder: Kretschmann, Klaus
Berliner Strasse 1
W-6094 Bischofsheim(DE)
Erfinder: Lindner, Werner
Kurhausstrasse 16b
W-6238 Hofheim am Taunus(DE)
Erfinder: Rossmeissl, Rudolf
Marienbader Strasse 5
W-8851 Mertingen(DE)
Erfinder: Millauer, Hans, Dr.
An den 7 Bäumen 21a
W-6236 Eschborn(DE)
Erfinder: Ullmann, Gerhard
Jean-Bareth-Strasse 19
W-6080 Gross-Gerau(DE)

(54) **Elektrode für elektrochemische Reaktionsapparate.**

(57) Bei der Elektrode in Form eines rechtwinkligen Parallelflachs aus imprägniertem Graphitwerkstoff für elektrochemische Reaktionsapparate ist die Elektrode (4, 5) an ihren Ecken mit senkrecht zu ihren aktiven Elektrodenflächen (6, 7) verlaufenden Durchbrücken (8, 9, 10, 11) versehen. Von zwei sich diagonal gegenüberliegenden Durchbrüchen (8, 10) geht je eine Bohrung (12, 13) aus, die sich parallel zu den aktiven Elektrodenflächen (6, 7) in Richtung benachbartem Durchbruch (9, 10) erstreckt. Die Bohrungen (12, 13) weisen Verbindungskanäle (14, 15) zu den aktiven Elektrodenflächen (6, 7) auf.

EP 0 437 842 A1

## ELEKTRODE FÜR ELEKTROCHEMISCHE REAKTIONSAPPARATE

Gegenstand der Erfindung ist eine Elektrode in Form eines rechtwinkligen Parallelflachs aus imprägniertem Graphitwerkstoff für elektrochemische Reaktionsapparate in Filterpressenbauart zur Dehalogenierung von organischen Verbindungen.

Bei der Dehalogenierung von mehrfach bromierten oder chlorierten Essigsäuren, der selektiven elektrochemischen Substitution von Halogen in Halogenacrylsäuren durch Wasserstoff oder Deuterium, der Herstellung fluorierter Acrylsäuren durch elektrochemische Dehalogenierung chlorhaltiger Vorstufen oder der elektrochemischen Herstellung von ungesättigten halogenierten Kohlenwasserstoffen handelt es sich um kathodische Dehalogenierungsreaktionen in Gegenwart katalytischer Mengen von Metallsalzen wie z.B. Bleiacetat, Kupfernitrat und andere. Die Reaktionen werden in geteilten Elektrolysezellen in Gegenwart von Wasser bei Stromdichten bis zu 8000 A/m$^2$ unter stark sauren Bedingungen durchgeführt. An der Anode werden wäßrige oder alkoholische Halogenwasserstoffsäuren zu elementarem Halogen oxidiert. Gefährliche Substanzen von teilweise erheblicher Toxizität wie halogenierte Essigsäuren, fluorierte Acrylsäure oder fluorierte Halogenkohlenwasserstoffe können also elektrolysiert werden. Bei den Elektrolyseprozessen abgespaltener Brom- oder Chlorwasserstoff bzw. das anodisch gebildete Halogen bilden aggressive und gegen Metalle extrem korrosiv wirkende Elektrolyte. Beispiele für derartige Elektrolyte sind Gemische aus Mono- und Dichloressigsäure und konzentrierter Salzsäure bzw. Chlor und konzentrierter Salzsäure. Die Elektrolyte besitzen sehr gute elektrische Leitfähigkeiten. Die Prozesse werden bei Temperaturen bis 90° C und teilweise unter Drücken bis 10 bar durchgeführt. Als Elektrodenmaterial wird vorzugsweise Graphit verwendet.

Für die Durchführung solcher Dehalogenierungsverfahren im technischen Maßstab kommen vorzugsweise geteilte Durchfluß-Elektrolysezellen in Betracht. Durchfluß-Elektrolysezellen gestatten z.B. wegen ihrer geschlossenen Bauweise die Elektroyse von toxischen, aggressiven oder anderweitig gefährlichen Stoffen. Ferner lassen sich in Durchfluß-Elektrolyszellen hohe Elektrolyt-Strömungsgeschwindigkeiten im Bereich von etwa 0,5 - 2 m/sec relativ zu den Elektroden erzielen. Die gebräuchlichste Ausführung einer geteilten Durchfluß-Elektroylsezelle stellt die Platten- und Rahmenzelle dar. Sie besteht im wesentlichen aus meist rechteckigen Elektrodenplatten und diese umfassende Rahmen aus Kunststoff, beispielsweise Polyethylen, Polypropylen, Polyvinylchlorid oder Polyvinylidenfluorid. Die Elektrodenplatte und der zugehörige Rahmen sind häufig zu Montageeinheiten miteinander verbunden. Durch Zusammenpressen mehrerer derartiger Platten- und Rahmeneinheiten erhält man ein Paket, das nach der Bauart von Filterpressen zusammengefaßt ist. Es können in das Paket noch weitere Rahmeneinheiten eingefügt werden, beispielsweise zur Aufnahme von Abstandsnetzen oder Turbulenzerzeugern. Die zur Teilung der Zellen in Anoden- bzw. Kathodenabteile verwendeten Membranen werden entweder in einen separaten Rahmen eingesetzt oder direkt zwischen die Elektrodenrahmen eingeklemmt. Bei Elektrolysen in Durchluß-Elektrolysezellen in Filterpressenbauart, in denen Elektrolyte mit hoher elektrischer Leitfähigkeit verwendet werden, erfolgt die Versorgung mit elektrischer Energie meistens durch eine monopolare Parallelschaltung der Elektroden, d.h. der elektrische Strom wird an jede einzelne Kathode bzw. Anode über separate Stromzuführung herangeführt. Zu diesem Zweck sind die Anoden- und Kathodenplatten auf jeweils gegenüberliegenden Seiten der Zelle zwischen den Rahmen durchgeführt und außerhalb der Zelle mit Stromanschlüssen versehen.

Derartige Platten- und Rahmenzellen haben jedoch den Nachteil, daß beim Zusammenpressen des Zellenpakets die auftretenden Kräfte von den nicht besonders dimensionsstabilen Rahmen aus Plastikwerkstoffen aufgenommen werden müssen. Unter Dauerbelastung, insbesondere bei erhöhten Arbeitstemperaturen und erhöhten Arbeitsdrücken, wobei zur Kompensation der letzteren wiederum höhere Preßkräfte erforderlich sind, kann es leicht zur Verformung (Fließen) dieser Werkstoffe kommen. Außerdem bewirken die bei Organoelektrosynthesen vorkommenden Elektrolyte in Abhängigkeit von Art und Konzentration der darin enthaltenen organischen Verbindungen bei vielen der üblichen Kunststoffe Quellen oder Materialversprödung, wodurch es zum Verziehen der Zellenrahmen kommt. Darüberhinaus kommt es infolge der relativ hohen thermischen Ausdehnungskoeffizienten der üblicherweise für die Herstellung der Zellenrahmen benutzten Kunststoffe (ca. Faktor 10 gegenüber Graphit), insbesondere in der Längsrichtung des Zellenpaketes zu erheblichen Längenveränderungen, die sich durch die üblichen Teller- oder Schraubenfedern der Preßvorrichtung nur schwierig kompensieren lassen. Die vorstehend genannten Eigenschaften der Kunststoffe führen daher häufig zu Undichtigkeiten des Zellenpakets mit hohen Sicherheits-, Gesundheits- und Umweltrisiken; sie machen kostspielige Maßnahmen wie Auffangwannen und Gas-Absaugvorrichtungen erforderlich. Ein weiterer Nachteil bei den bekannten Platten- und Rahmenzellen ist die erschwerte Remontage und erneute Abdichtung des Zellenpaketes nach Reparaturen oder nach dem routinemäßigen Auswechseln von Elektroden bzw. Membranen, wenn die Zellenrahmen durch das vorstehend beschriebene Verformen, Quellen- bzw. Verziehen ihre Maßhaltigkeit eingebüßt haben.

Die vorstehend beschriebenen Probleme bei den bekannten Durchfluß-Elektrolyseapparaten in Filterpressenbauart werden durch eine Elektrode gelöst, die dadurch gekennzeichnet ist, daß die Elektrode an ihren Ecken mit senkrecht zu ihren aktiven Elektrodenflächen verlaufenden Durchbrüchen versehen ist, von zwei sich diagonal gegenüberliegenden Durchbrüchen je eine Bohrung ausgeht, die sich parallel zu den aktiven Elektrodenflächen in Richtung benachbartem Durchbruch erstreckt und die Bohrungen Verbindungskanäle zu den aktiven Elektrodenflächen aufweisen.

Eine Seite der Elektrode kann mit einer Ausnehmung oder einer Kontaktfahne für die Stromzuführung versehen sein.

Die mit der erfindungsgemäßen Elektrode erreichten Vorteile sind im wesentlichen darin zu sehen, daß bei den damit aufgebauten Elektrolyseapparaten die Rahmen mit all den damit verbundenen Dichtproblemen entfallen und eine optimale Verteilung der Elektrolyte in die einzelnen Elektrolyträume gewährleistet ist. Für das elektrische Kontaktieren stehen ausreichend große Querschnitte zur Verfügung. Zum Aufbau des Elektrolyseurs ist eine einzige Elektrodenform ausreichend.

Im folgenden wird die Erfindung anhand einer lediglich einen Ausführungsweg darstellenden Zeichnung näher erläutert.

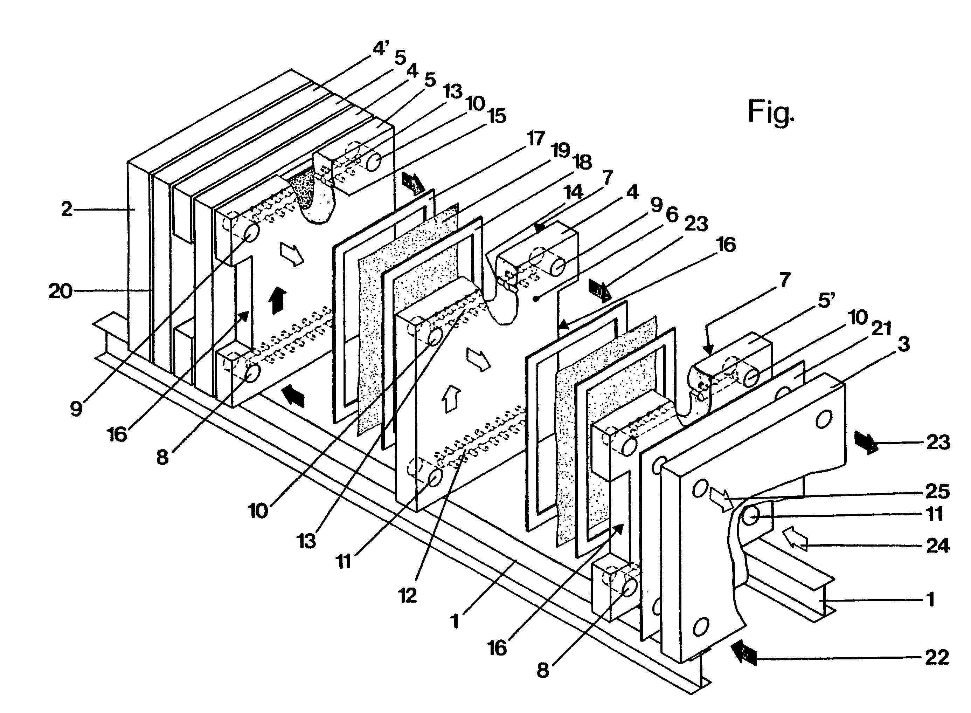

Die Figur zeigt einen Elektrolyseapparat in Filterpressenbauart aufgebaut mit der erfindungsgemäßen Elektrode.

Die Elektroden (4,5) sind plattenförmig ausgebildet, d.h. sie haben die Form eines rechtwinkligen Parallelflachs, dessen größte Flächen als aktive Elektrodenflächen (6,7) arbeiten. Senkrecht zu den aktiven Elektrodenflächen (6,7) sind die Elektroden (4,5) an ihren Ecken mit Durchbrüchen (8,9,10,11) versehen. Die Durchbrüche (8,9,10,11) bilden bei montiertem Elektrolyseapparat die Sammelkanäle für die Elektrolyten. Um Elektrolyse in und/oder einen Potentialausgleich über die Elektrolytsammelkanäle zu benachbarten Elektroden zu vermeiden, sind diese isolierend ausgekleidet (nicht dargestellt). Von zwei sich diagonal gegenüberliegenden Durchbrüchen (8,10) geht je eine Bohrung (12,13) aus, die sich parallel zu den aktiven Elektrodenflächen (6,7) in Richtung benachbarter Durchbrüche (9,11) erstreckt ohne mit diesen eine Verbindung herzustellen. Die Bohrungen (12,13) weisen Verbindungskanäle (14,15) zu den aktiven Elektrodenflächen (6,7) auf, über die die Elektroyte von den Sammelkanälen über die Bohrungen (12,13) in die Elektrolyträume gelangen und umgekehrt. Eine Seite der Elektroden (4,5) kann mit einer Ausnehmung (16) versehen sein. Statt der Ausnehmung kann eine Seite der Elektroden auch eine Kontaktfahne zur Aufnahme der Stromzuführung aufweisen (nicht dargestellt).

Mit der erfindungsgemäßen Elektrode läßt sich ein Elektrolyseapparat wie folgt aufbauen: Der Elektrode (4) steht die Gegenelektrode (5), eine um die senkrechte Achse 180° gedrehte Elektrode (4), gegenüber. Zwischen den Elektroden (4,5) sind Dichtungen (17,18) angeordnet, zwischen denen eine Membran (19) eingeklemmt ist, sodaß zwei Elektrolytkammern entstehen. Solche Grundeinheiten aus Elektrode (4), Dichtung (17), Membran (19), Dichtung (18) und Gegenelektrode (5) können in beliebiger Anzahl zwischen einer auf zwei Trägern (1) feststehenden Endplatte (2) und einer beweglichen Endplatte (3) angeordnet sein. Der so entstehende Zellenblock kann mittels mehrerer um den Zellenblock gleichmäßig angeordneter Zuganker (nicht dargestellt) oder dergleichen zusammengepreßt werden. Mittels Dichtringen (nicht dargestellt) zwischen den Elektroden (4,5) werden die Durchbrüche (8,9,10,11) zu Sammelkanälen verbunden. Zwischen den Endplatten (2,3) und derjeweils angrenzenden Elektrode (4,5) kann ein Isolator (20, 21) angeordnet sein. Bei den endständigen Elektroden (4,5) können die in Richtung Endplatten (2,3) weisenden Verbindungskanäle (14,15) mit geeigneten Pfropfen verschlossen sein. Die Elektrolytflächen der Elektroden (4) werden über den Sammelkanal, in den der Pfeil (22) (schwarz) weist, mit Elektrolyt versorgt und über den Sammelkanal, aus dem der Pfeil (23) (schwarz) kommt, entsorgt. Die Elektrodenflächen der Elektrode (5) (Gegenelektrode) werden über den Sammelkanal, in den der Pfeil (24) weist, mit Elektrolyt versorgt und über den Sammelkanal, aus dem der Pfeil (25) kommt, entsorgt. Die Pfeile (22, 23, 24 und 25) geben jeweils die Fließrichtung der Elektrolyten in den Sammelkanälen und den Elektrolyträumen an. Bis auf die beiden Endelektroden (4' und 5') arbeiten alle Elektroden beidseitig, dementsprechend muß auch die Elektrolytführung erfolgen. Durch die Ausnehmungen (16) werden die benachbarten Elektroden für ein besonders vorteilhaftes Anbringen der Stromzuführungen zugänglich.

## Patentansprüche

1. Elektrode in Form eines rechtwinkligen Parallelflachs aus imprägniertem Graphitwerkstoff für elektrochemische Reaktionsapparate, dadurch gekennzeichnet, daß die Elektrode (4,5) an ihren Ecken mit senkrecht zu ihren aktiven Elektrodenflächen (6,7) verlaufenden Durchbrüchen (8,9,10,11) versehen ist, von zwei sich diagonal gegenüberliegenden Durchbrüchen (8,10) je eine Bohrung (12, 13) ausgeht, die sich prallel zu den aktiven Elektrodenflächen (6,7) in Richtung benachbartem Durchbruch (9,11) erstreckt und die Bohrungen (12,13) Verbindungskanäle (14,15) zu den aktiven Elektrodenflächen (6,7) aufweisen.

2. Elektrode nach Anspruch 1, dadurch gekennzeichnet, daß eine Seite der Elektrode (4,5) mit einer Ausnehmung (16) versehen ist.

3. Elektrode nach Anspruch 1, dadurch gekennzeichnet, daß eine Seite der Elektrode (4,5) mit einer Kontaktfahne für die Stromzuführung versehen ist.

EP 0 437 842 A1

Fig.

5

**Europäisches Patentamt**

# EUROPÄISCHER RECHERCHENBERICHT

Nummer der Anmeldung

**EP 90 12 5634**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 217 401 (A. PELLEGRI) <br> * Spalte 3, Zeilen 43-53; Spalte 5, Zeile 65 - Spalte 6, Zeile 57; Figuren 1,2 * <br> – – – | 1,3 | C <br> 25 B 11/03 <br> C 25 B 9/00 <br> H 01 M 4/86 |
| Y | CH-A-6 456 74 (B.B.C. AG) <br> * Das ganze Dokument * <br> – – – | 1 | |
| Y | US-A-3 871 922 (H. BÖHM) <br> * Spalte 1, Zeile 63 - Spalte 4, Zeile 30; Figuren 1,2 * <br> – – – | 1 | |
| A | FR-A-2 487 861 (A. SKLYAROV) <br> – – – – – | | |
| | | | **RECHERCHIERTE SACHGEBIETE (Int. Cl.5)** <br><br> C 25 B 11 <br> C 25 B 9 <br> H 01 M 8 |

Der vorliegende Recherchenbericht wurde für alle Patentansprüche erstellt

| Recherchenort | Abschlußdatum der Recherche | Prüfer |
|---|---|---|
| Den Haag | 16 April 91 | GROSEILLER PH.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument